# EUROPEAN PATENT SPECIFICATION

(11) **EP 2 164 144 B1**
(45) Date of publication and mention of the grant of the patent: **10.01.2018**
(21) Application number: 09170357.9
(22) Date of filing: 15.09.2009
(51) Int. Cl.: H02G 5/02, H02B 1/21

(54) **Electrical busbar**
Stromschiene
Barre omnibus

(30) Priority: 15.09.2008 IT RM20080132 U
(43) Date of publication of application: 17.03.2010
(73) Proprietor: BTICINO S.P.A., Viale Borri, 231 21100 Varese (IT)
(72) Inventor: Maggi, Christian, I-21020, Buguggiate (Varese) (IT)
(74) Representative: Carangelo, Pierluigi

(56) References cited:
- US-A- 4 534 612
- US-A- 4 723 917
- US-A- 5 025 121

## Description

The present invention refers to the technical field of electrical installations and, more specifically, it concerns an electrical busbar as defined in the preamble of claim 1. US4534612 discloses an electrical busbar according to the preamble of claim 1. In electrical installations, particularly but not exclusively of the industrial type, electrical energy busbars are used, for example fixed to supporting structures foreseen in switchboards or cabinets, to which the user devices are connected with the interposition of electrical apparatuses, like switches, disconnectors, protection devices and other.

Busbars of the aforementioned type are usually interely inserted in a support suitable for housing a plurality of busbars. The function of such a support is not only that of supporting the busbars, but also that of limiting as much as possible access to them for obvious safety reasons.

In order to reduce as much as possible the risks of contact with live parts, particularly with their front profile, a test has been developed to be used at the design stage of new electrical apparatuses. In other words a maximum size of opening has been defined and standardised that satisfies the necessary safety requirements and a standardised tool, commonly known as "testing finger" or IP20, which allows testing of conformity with requirements.

In order to directly or indirectly couple the electrical apparatuses to the busbars, in the latter case for example through the use of suitable adapters, it is known to use clip interconnection elements. Clip interconnection elements of the state of the art are, for example, described in the French patent application published with number FR 2 562 344.

A problem of the electrical busbars of the prior art is linked to the fact that, particularly in the case of failure of the installation, the clip interconnection elements may detach from the busbars, for example due to the inherent electromagnetic forces that apply between the busbars themselves. Indeed, the high intensity electrical currents that pass through the busbars generate electromagnetic forces that are the cause of vibrations and/or deformations of the busbars themselves. Such vibrations and/or deformations can determine a detachment of the clips from the busbars and, consequently, of the electrical apparatuses associated with them. This can be a cause of serious safety problems, such as fire or electric discharges to which any person located near to the busbars could be subjected.

The problem forming the basis of the present invention is to provide a busbar that is able to at least partially avoid the drawbacks of the prior art discussed above. Such a problem has been solved by an electrical busbar as defined in the attached claim 1 in its most general form and in the dependent claims in some particular embodiments.

Also forming the object of the present invention is a group of parts as defined in claim 11 and in the dependent claims in some particular embodiments.

The characteristics and advantages of the electrical busbar object of the present invention shall become clearer from the description of different embodiments, given hereafter for indicating and not limiting purposes, with reference to the attached figures, where:
- figure 1 illustrates an axonometric view in which it is possible to see the front part of a switchboard, without external protection panels, with vertical electrical busbars, with insulating IP20 protective covers and the possibility of branching over their entire length, on which a first base is mounted, electrically connected to the busbars, and a second base, electrically connected to the first base, on which an electrical apparatus is mounted;

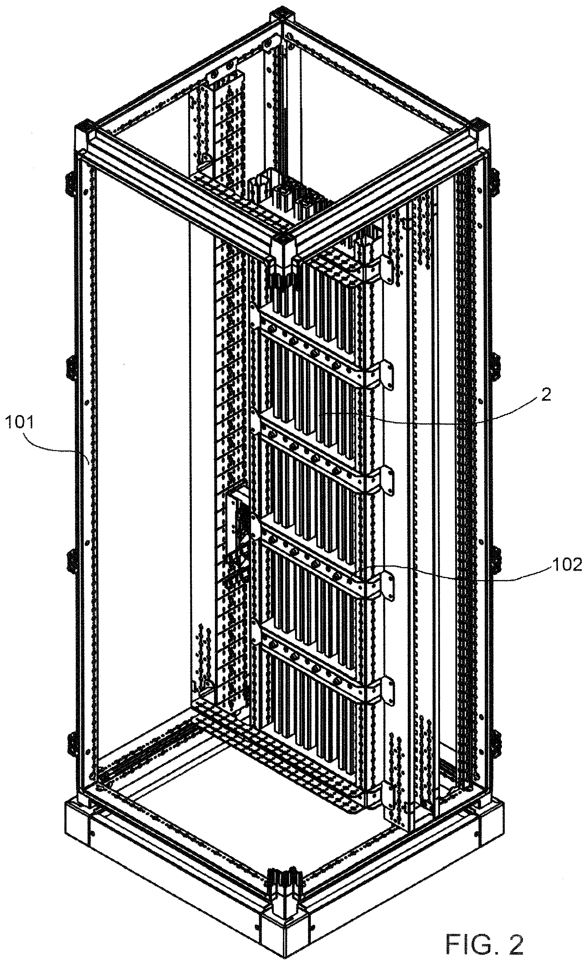

- figure 2 illustrates an axonometric view of the switchboard of figure 1 in which it is possible to see the rear part of such a switchboard and in which the portion of the supporting framework is partially sectioned;
- figure 3 illustrates an exploded axonometric view of a system of busbars, with IP20 covers, lateral closures and supporting insulators of the busbars at the framework of a switchboard;
- figure 4 illustrates an exploded partially sectioned axonometric view of a terminal portion of a busbar with protective shell on a rail-shaped extension or connection pin or branching pin for the electrical connection of electrical apparatuses or bases for them;
- figure 5 illustrates an axonometric view of the busbar of figure 4 with the protective shell coupled with the rail-shaped extension;
- figure 6 illustrates the cross section of the profile for a busbar of figure 5 in which it is possible to see a four-"C" shape and the adjacent rail or branching pin for the electrical contact;
- figure 7 illustrates the cross section of a first profile for a busbar, with a one-"C" shape adjacent to a rail or branching pin for electrical contact;
- figure 8 illustrates the cross section of a second profile for a busbar, with a one-"C" shape laterally adjacent to a rail or branching pin for electrical contact;
- figure 9 illustrates a cross section of the apex end of a rail or branching pin for the electrical contact equipped on the front with a protective shell;
- figure 10 illustrates an axonometric view of a supporting insulator with anchoring blocks for busbars;
- figure 11 illustrates an axonometric view with parts separated of the insulator with blocks of figure 10;
- figure 12 illustrates a step of insertion of a busbar in the insulator for busbars with blocks still open;
- figure 13 illustrates a second step of insertion of a busbar into the insulator of figure 10 in which it is possible to see a block rotated in geometric coupling position with the busbar to block it;
- figure 14 illustrates a second axonometric view of the step of figure 13, in which the busbar is arranged between two anchoring blocks of the insulator rotated in geometric coupling position with the busbar to block it;
- figure 15 illustrates a section view transversal to the busbar of the assembly of figure 14, in which a protective shell is also represented coupled with the electrical contact rail of the busbar;
- figure 16 illustrates an enlarged detail of figure 15 from which the geometric coupling to securely lock the busbar can be understood;
- figures 17a and 17b illustrate partially sectioned axonometric views of a detail of a switchboard with busbars with which a first base is associated;
- figure 18 illustrates an axonometric view of a detail of figure 17a where the first base is drawn transparently to highlight a clip interconnection element housed in it and engaged with the connection pin of a busbar;
- figure 19 illustrates an axonometric front view of a first base to be fixed to the guides of a frame of a switchboard coupled with busbars;
- figure 20 illustrates an axonometric view from behind of the first base of figure 19;
- figure 21 illustrates an exploded front axonometric view of the first base of figure 19;
- figure 22 illustrates an exploded axonometric view from behind of the first base of figure 19;
- figures 23 and 24 illustrate axonometric views with parts separated of an output clip of the first base;

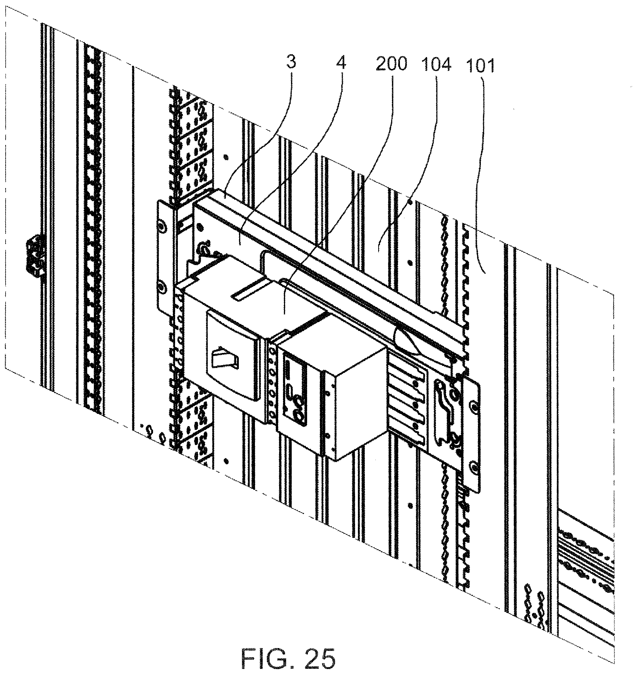

- figure 25 illustrates an axonometric view of a portion of a switchboard with busbars, first base, a second base removably fixed to the first base and an electrical apparatus removably fixed to the second base;
- figures 26, 27 and 28 illustrate axonometric views of details of figure 25 in which some enlargements are depicted with transparent portions to highlight some connections between the second base and the first base;
- figures 29 and 30 illustrate respective axonometric views of the front and rear of a second base;

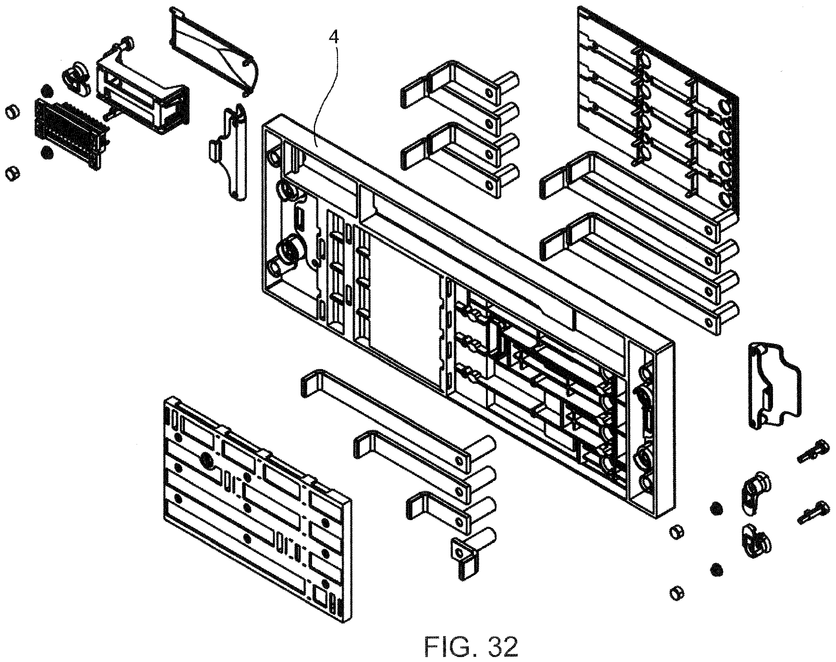

- figures 31 and 32 illustrate respective axonometric views of the front and rear with parts separated of the second base of figures 29 and 30;

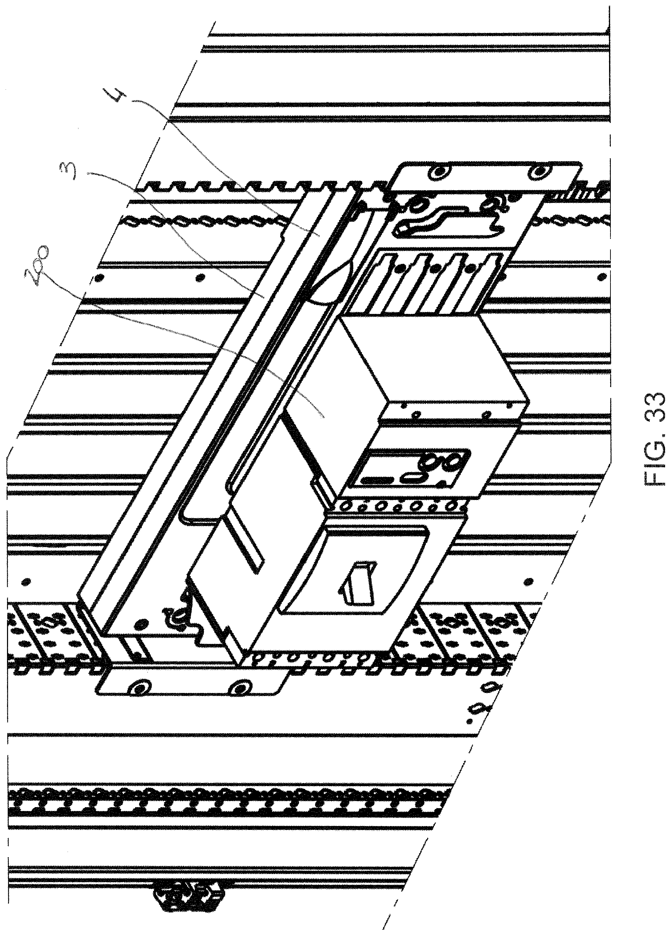

- figure 33 illustrates an axonometric view of a portion of switchboard with busbars, first base, second base and an electrical apparatus.
- figure 34 illustrates a cross section of a further embodiment of a profile for a busbar;
- figure 35 illustrates a cross section of a further embodiment of a profile for a busbar;
- figure 36 illustrates an exploded axonometric view of a group of parts comprising busbars, IP20 insulating covers and supporting insulators of the busbars at the framework of a switchboard, the busbars being made according to the embodiment of figure 35;
- figure 37 illustrates a partial cross section view of the group of parts of figure 36 with some parts assembled and some parts detached;
- figure 38 illustrates a partial cross section view similar to that of figure 37 in which the components represented in such a figure are represented assembled together;
- figure 39 illustrates a partial cross section view of a busbar according to the embodiment of figure 35, in which the busbar is coupled with a pair of insulating covers and with a first base through a clip interconnection element;
- figure 40 illustrates a partial cross section view in which it is possible to see a pair of busbars according to the embodiment of figure 6 provided with protective shells and insulating covers, where such busbars are coupled with a supporting insulator according to the embodiment of figure 16;
- figure 41 illustrates a partial cross section view in which it is possible to see the components of figure 40 and in which one of the busbars is coupled at the front with a stud pin terminal of an electrical apparatus;

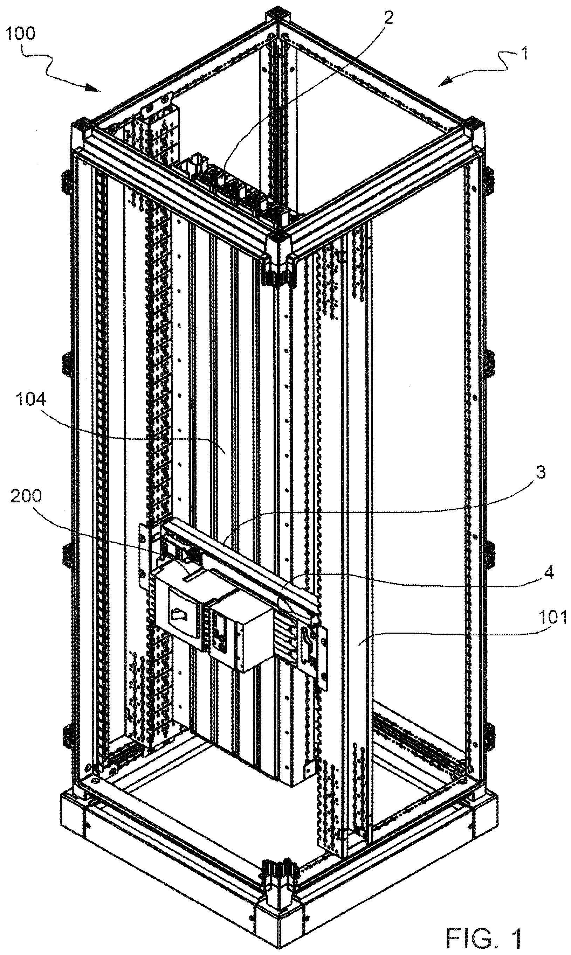

In accordance with a first general embodiment, a cabling system, in the example a fast cabling system 1 (figure 1), comprises:
- at least one electrical busbar 2;
- at least one first base 3 mounted electrically associated with the at least one busbar 2 and suitable for being fixed to a supporting structure;
- at least one second removable base 4 suitable for being electrically associated and supported at the first base 3 so that in operating conditions it can be separated from the first base without interrupting the voltage feeding from the at least one busbar 2 and ensuring optimal protection against electrical accidents during use and removal.

In accordance with a particularly advantageous embodiment, the first base can also be removably mounted so that in operating conditions it can be removed from the supporting structure without interrupting the voltage feeding from the at least one busbar 2 and ensuring optimal protection against electrical accidents during use and removal. In the example of figure 1, the cabling system 1 comprises a plurality of busbars 2, more specifically four busbars.

According to a first embodiment, the at least one busbar 2 is a busbar made entirely from copper. In accordance with a variant embodiment, the at least one busbar 2 is made from aluminium and it is equipped with an at least partial surface coating of another material with good electroconductive properties, such as copper or tin.

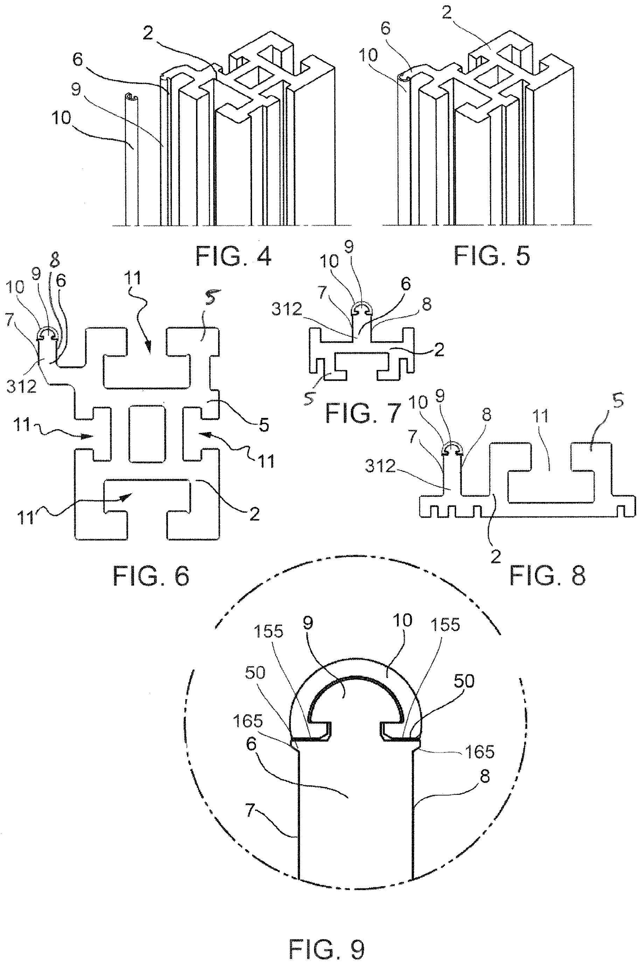

With reference for example to figures 4-6, the at least one busbar 2 includes a main body with a longitudinal profile and an extension or pin 6 that projects from the main body. Such an extension includes an end portion 312 proximal to the main body and an apex portion 9 distal from such a body. As can be observed from the figures, in the example the apex portion 9 has a profile, according to a section transversal to the direction of longitudinal extension of the busbar 2, that is substantially mushroom-shaped. The extension 6, in the longitudinal direction, forms an electrical contact rail 6 that is suitable for the electrical connection with at least two of its opposite surfaces 7, 8. In other words, the rail 6 or pin 6 comprises two of its opposite contact surfaces 7, 8 foreseen to make an electrical connection to the busbar 2.

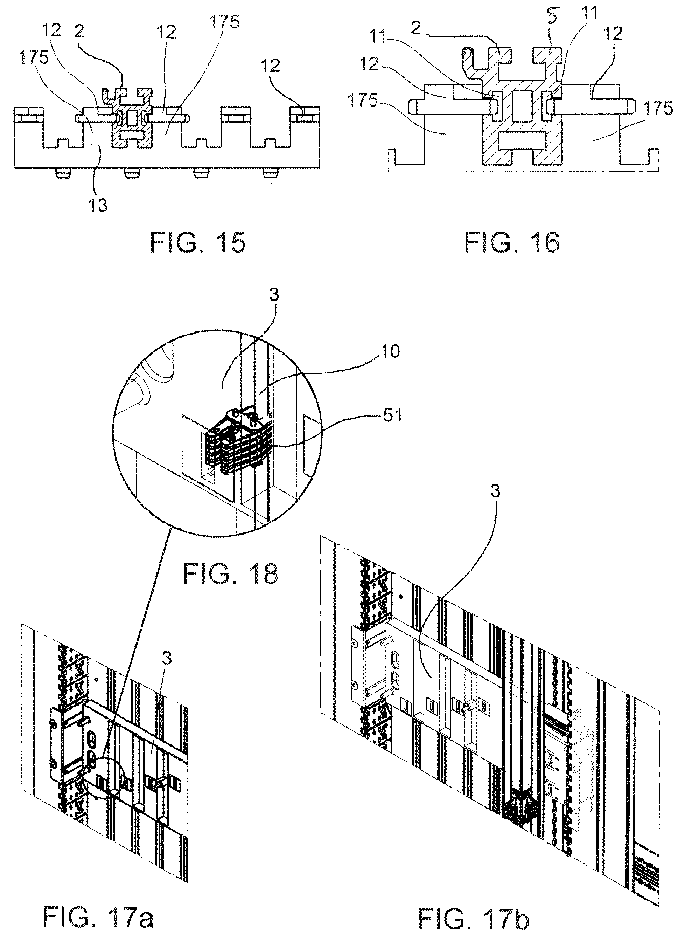

With reference for example to figure 9, it can be seen that the pin 6 comprises protrusions 50, in the example there are two, which project from both of the opposite contact surfaces 7, 8. In other words, the protrusions 50 extend laterally from two opposite sides with respect to the apex portion 9. In this way the protrusions 50 advantageously allow a stable and strong clamping of at least one clip interconnection element or clip 51 (figures 18, 21 and 39) to be ensured, reducing or avoiding the possibility of it being able to uncouple from the pin, for example due to a failure that involves the switchboard inside which the at least one busbar 2 is possibly installed. It should be observed that the protrusions 50 are arranged between the contact surfaces 7, 8 and the apex portion or apex 9. More specifically, such protrusions are distinct from the apex portion 9 and arranged near to such a portion.

According to the invention the apex 9 of the pin, facing the electrical apparatus 200 (figure 1), is associated with a protective shell 10 made from insulating material for IP20 protection (figures 4 to 9). The protective shell 10 can be stably associated with the apex portion 9 of the pin 6 even while the busbar 2 is in use, the apex portion facing towards said shell. In other words, the shell 6 is suitable for being removably coupled in a stable manner with the apex portion 9 even while the busbar 2 is in use. Advantageously, according to an embodiment, the shell 10 is associated with an undercut snap-in system in seats provided on the outside with the protrusions 50 (figure 9).

In accordance with an advantageous embodiment, the protrusions 50 extend laterally with respect to the apex portion 9, i.e. with respect to the pin 6, beyond such an apex portion. In accordance with an embodiment, the protrusions 50 are obtained through a portion of the pin 6 that is tapered on the opposite side with respect to the apex portion 9. It should be noted, in particular, that that tapered portion includes a section transversal to the direction of projection of the pin 6, which decreases moving in the direction going from the apex portion 9 towards the end portion 312 proximal to the main body of the busbar 2, i.e. towards the end portion 312 of the pin that is connected to the remaining part of the busbar 2.

Preferably, the tapered portion comprises a portion having, according to a section transversal to the direction of longitudinal extension of the busbar 2, a substantially trapezium-shaped profile, preferably an isosceles trapezium-shaped profile.

In accordance with a possible embodiment, each protrusion 50 comprises at least one flat support wall 155 suitable for interacting with a portion of the protective shell 10 fastened to the apex portion 9, and a flat wall 165 inclined and opposite with respect to the flat support wall.

In accordance with a general embodiment, the at least one busbar 2 has a body with longitudinal profile and a cross section comprising:
- at least one C-shaped portion (indicated in the figures with reference numeral 5) defining a seat 11;
- an extension that projects or pin 6 forming, in the longitudinal direction, an electrical contact rail 6 suitable for the electrical connection at least with two its opposite surfaces 7, 8;
- said pin having an apex portion 9 frontally facing and associated with a protective shell 10;
- said protective shell 10 being made from insulating material and stably associated with said apex portion 9 of the pin 6 even when the busbar 2 is in use.

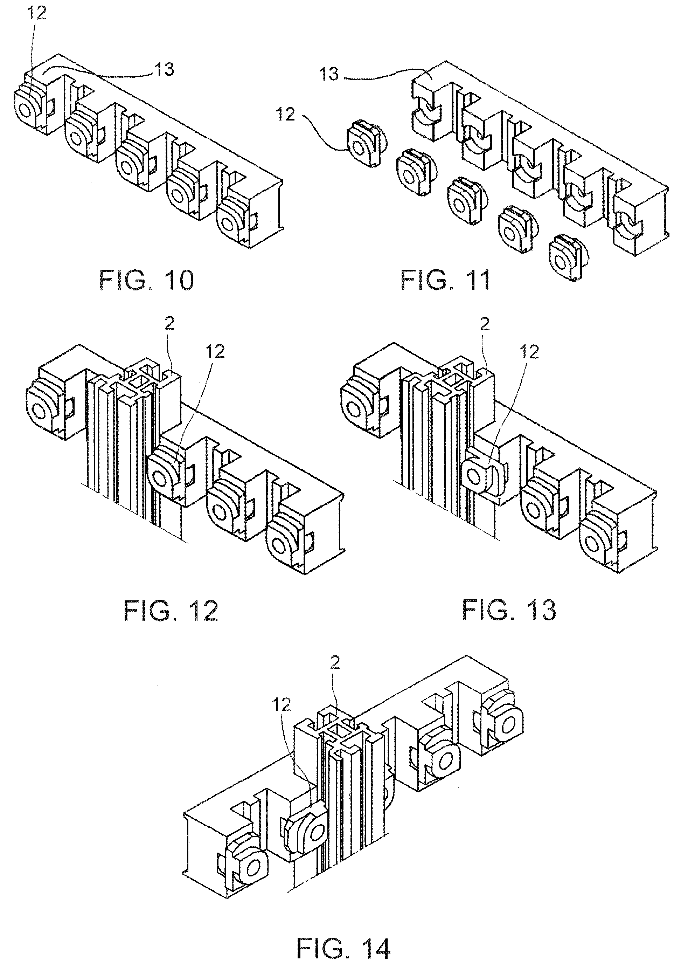

In accordance with an embodiment, a busbar 2 comprises a seat 11 of the busbar 2 that is suitable for receiving an anchoring block 12 (figure 11) of a supporting insulator 13 of the at least one busbar 2, so as to geometrically couple with the anchoring block. In other words, such a seat 11 is an anchoring seat. In the example of figure 11, the insulator 13 has, in particular, five anchoring blocks 12.

According to an embodiment (figures 10-16) the block 12 can be rotated between a disengaged position (figure 10) and an engaged position (figures 13 and 16) with the seat 11 of the busbar, so as to removably and firmly fix the at least one busbar 2 to the insulator 13 in a fast and safe manner.

With reference to figures 6 and 16, in accordance with an embodiment the busbar 2 comprises at least two seats 11 defined by a "C"-shaped section which are arranged opposite one another and suitable for receiving opposite anchoring blocks 12 of a supporting insulator 13, so as to geometrically couple with the anchoring blocks. In other words, according to an embodiment, the busbar 2 comprises at least two anchoring seats defined by a "C"-shaped section arranged opposite one another. According to an embodiment, the blocks 12 are able to rotate between a disengaged position and an engaged position with the anchoring seats 11 of the busbar to removably and firmly fix the at least one busbar 2 to the insulator 13 in a fast and safe manner.

In accordance with an embodiment, the busbar 2 comprises at least 3 seats 11 defined by a "C"-shaped section.

In accordance with a further embodiment, illustrated for example in figures 4, 6 and 16, the busbar 2 comprises at least 4 seats 11 defined by a "C"-shaped section.

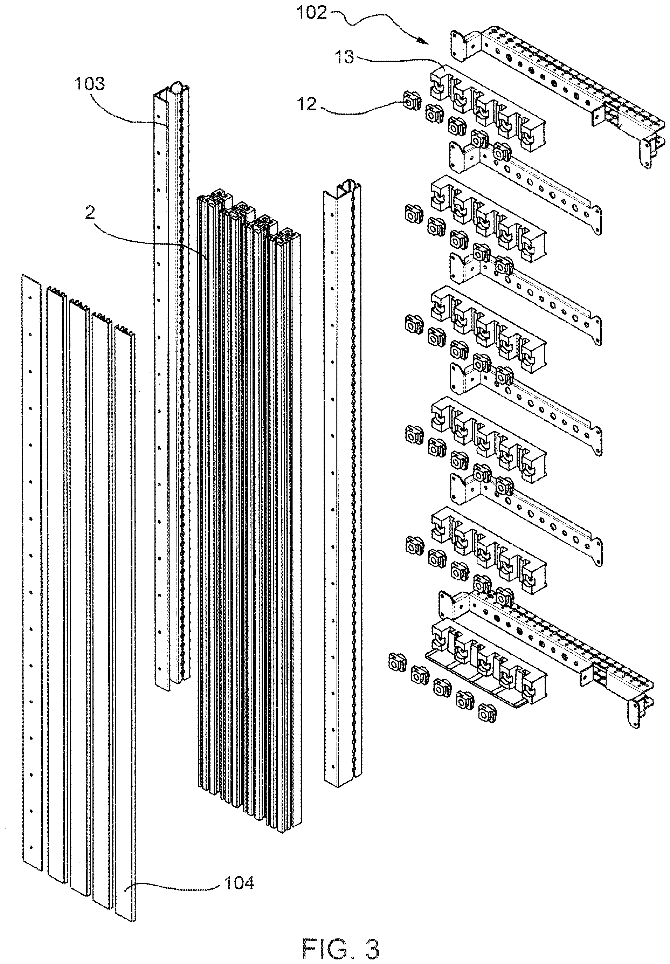

With reference to figures 1 and 3, in accordance with an advantageous embodiment, a cabling system 1, for example for a switchboard 100, comprises a supporting frame 101 on which supporting insulator groups 102 are fixed on which busbars 2 are fixed in a quick and safe manner, closed laterally by lateral closures 103. At the front, insulating covers 104 capable of ensuring IP20 protection are associated with the busbars 2, in accordance with an embodiment snapped-in, in any case allowing free branching in operating conditions from the entire length of the busbar 2.

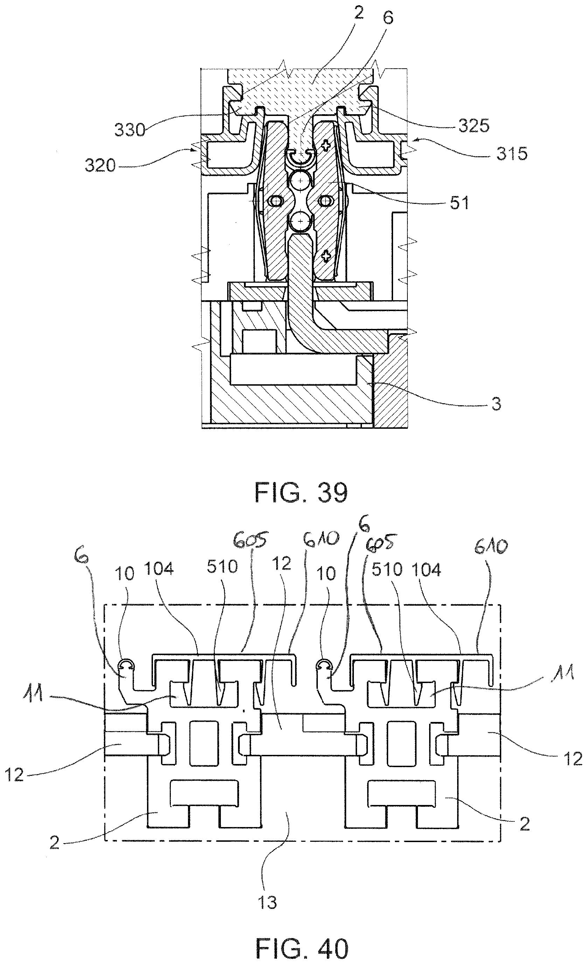

Preferably, in accordance with an embodiment, the busbar 2 has a transversal section, for example of the box-like type, with at least one portion having a frontal "C"-shape 5, suitable for coupling, preferably snapped-in, of the IP20 protection covers 104 (figure 40). Said transversal section of the busbar 2 also has at least one pin 6 arranged laterally so that between the IP20 cover 104 and the pin 6 there is a minimum space suitable for the insertion of an electrical connection and suitable for allowing protection conforming to the "finger test" (figure 40) . In other words, such a minimum space avoids the introduction of a finger according to the "finger test".

According to an embodiment, the busbar 2 comprises a transversal section including a portion with a frontal "C"-shape where such a shape is arranged laterally to the pin 6 (figures 6, 8, 40, 41) and defines a seat 11. In particular, such portion with a frontal "C"-shape is suitable for coupling with at least one insulating cover 104 able to be associated with the busbar 2. Regarding this, with particular reference to figure 40, it can be seen that according to an embodiment, the insulating cover 104 comprises at least one pair of toothed hooks 510 suitable for being inserted in the seat 11 defined by the portion having the frontal "C"-shape, so as to engage with such a portion to allow the snap-coupling of the insulating cover 104 with the busbar 2. In other words, the insulating cover 104 comprises snap-fastening elements 510 that are suitable for interacting with the portion with frontal "C"-shape of the busbar 2, to removably couple such a cover with the busbar itself. In the example of figure 40, each insulating cover 104 comprises, in particular, three toothed hooks 510, two of which are inside the seat 11 and one is outside such a seat, which are suitable for interacting with the aforementioned portion with frontal "C"-shape.

With reference for example to figure 40, according to an advantageous embodiment the insulating cover 104 comprises a first cover portion 605 facing the busbar 2 and a second cover portion 610 that extends laterally to the first cover portion 605. The second cover portion extends laterally from the opposite side with respect to the pin 6 of the busbar with which the cover 104 itself is coupled. In particular, as can be seen for example in figure 40, the second cover portion 610 extends laterally beyond the main body of the busbar 2 so as to leave a minimum space between the second cover portion 610 and a further electrical connection rail or pin 6 belonging to a further busbar, such a further busbar being arranged side by side the aforementioned busbar. Such a minimum space is, in particular, suitable for allowing protection according to the "finger test" or IP20. More specifically, such a minimum space allows an electrical connection to be inserted but avoids the introduction of a finger according to the "finger test". In general, such a minimum space allows protection conforming to the finger test to be obtained.

In accordance with an embodiment, the busbar 2 has a transversal section with 4 "C"-shapes that define four seats 11 and a pin 6 for the electrical connection of at least one clip interconnection element or clip 51 (figures 18, 21 and 39) .

In accordance with an embodiment, said at least one busbar 2 is associated with a supporting insulator 13 for busbars that has a seat suitable for receiving the busbar 2 between two tines 175 (figure 16) at the end of which there are anchoring blocks 12 able to rotate between a disengaged position, which leaves the busbar free to come out from the seat of the insulator, and an engaged position in which the blocks insert into the seats 11 of the busbar 2 in an undercut manner, preventing them from coming out and ensuring a firm and secure attachment of the busbar (Figures 10 to 14).

In accordance with an embodiment, the anchoring block rotates by 90° acting upon a portion shaped like a fastening screw and able to be safely accessed, with IP20 protection, from the front side.

The block 12, by rotating, goes into abutment on the busbar 2, and wings of the block insert into the seats 11 or special slits foreseen on the busbar 2, ensuring the correct positioning and clamping of the busbar 2 on the insulator 13 (figure 16).

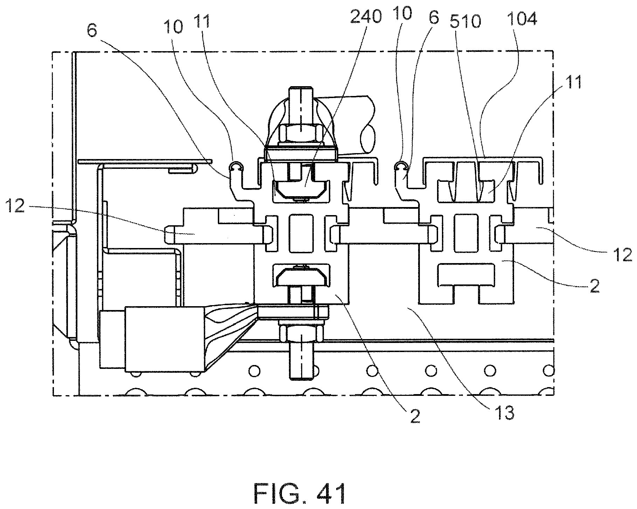

This system makes it possible to have the front busbar completely free, so as to be able to branch off over the entire length of the busbar 2, both on the pin 6 and on the seat with frontal "C"-shape. Regarding this, with particular reference to figure 41, it can be seen that in the case in which the busbar 2 comprises a portion with a frontal "C"-shape arranged laterally to the pin 6, the seat 11 defined by such a portion, when it is not completely covered at the front by an insulating cover 104, is suitable for housing a terminal of an electrical apparatus to branch off along the length of the busbar 2. With particular reference to the example of figure 41, one of the two busbars 2 represented is electrically connected with a stud pin terminal 240 that is able to be rotated between an engaged position and a disengaged position with the busbar 2.

With reference to figure 1, on the busbars 2 fixed to the frame 101 through the insulators 13, a first base 3 is mounted (figures 17 to 22).

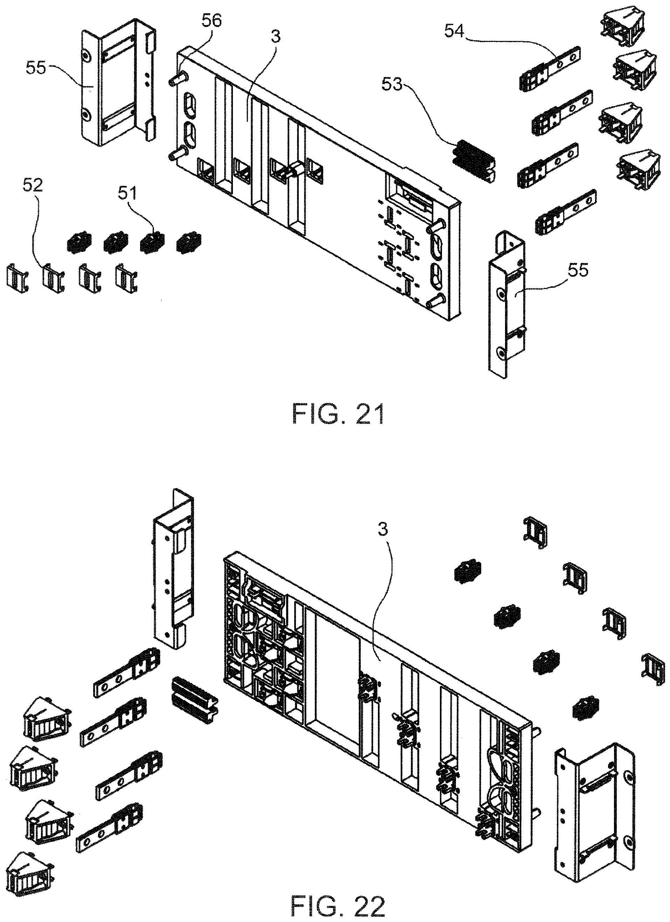

The clip interconnection elements or clips 51 (figure 21), housed in the base 3 itself, insert onto the busbars 2, in particular coupling with the lateral surfaces 7, 8 of the pins 6, ensuring the correct electrical connection (Fig. 18).

In figures 21 and 22 it is possible to see the first base 3 wherein the seats are formed in which the clips 51 are inserted, covered by IP20 insulating caps 52. Other seats receive a female terminal board 53 and output clips 54. The first base 3 is mounted on the structure through sliding guides 55 that allow the assembly position to be found immediately.

In accordance with an advantageous embodiment, the base 3 is provided laterally with guide 55 for quick and safe attachment to the frame, said attachment taking place in a guided manner ensuring a perfect coupling of the clips 51 of a predetermined phase with the respective pin 6 of the same phase.

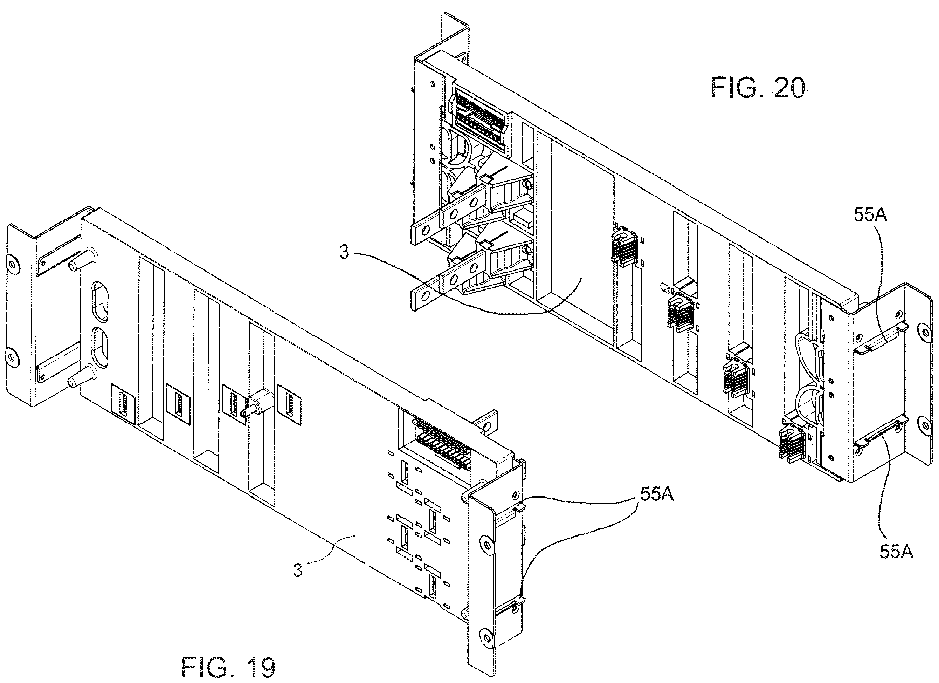

In accordance with a particularly advantageous embodiment, the guides 55 include guiding means 55A (figures 19 and 20) suitable for interacting with matching guiding means foreseen in respective supporting uprights of the frame. Such guiding means advantageously allow the first base 3 to be quickly and precisely positioned in the desired installation position. In accordance with an advantageous embodiment, the guiding means comprise at least one guiding rib 55A suitable for slidingly coupling with a matching guiding recess foreseen in a respective supporting upright. In accordance with a further advantageous embodiment, the guiding means can comprise a plurality of ribs that are parallel to one another foreseen at opposite end portions of the first base. In accordance with a possible embodiment, the guiding means could, however, comprise guiding recesses whereas the matching guiding means could comprise guiding ribs foreseen in the supporting uprights.

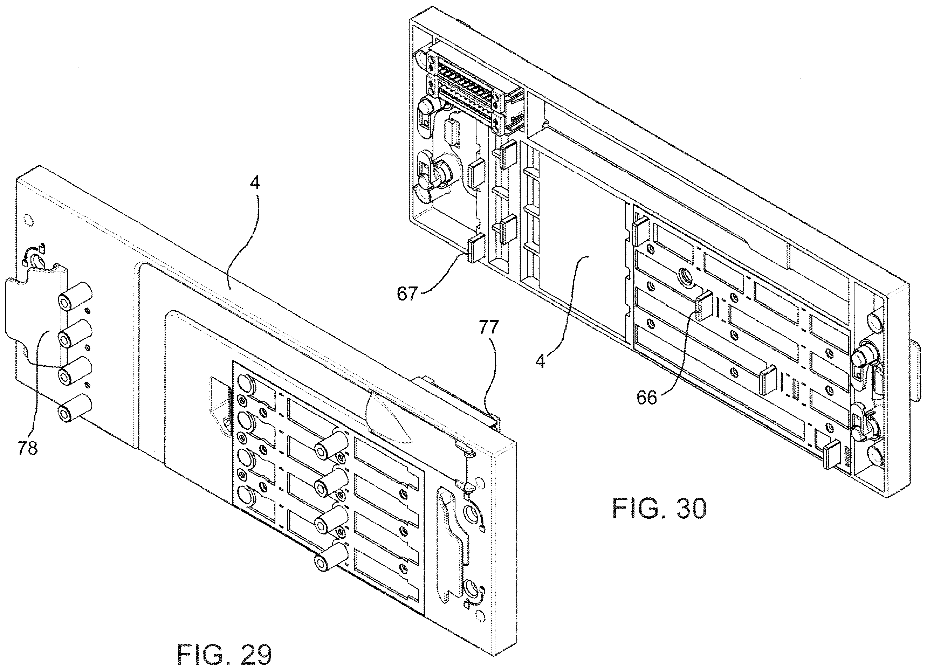

The clips 51, engage, on one side onto the busbars 2, in particular onto the pin 6 thereof, and on the other side with feeding pins 66 present in the second base 4 (figure 30) .

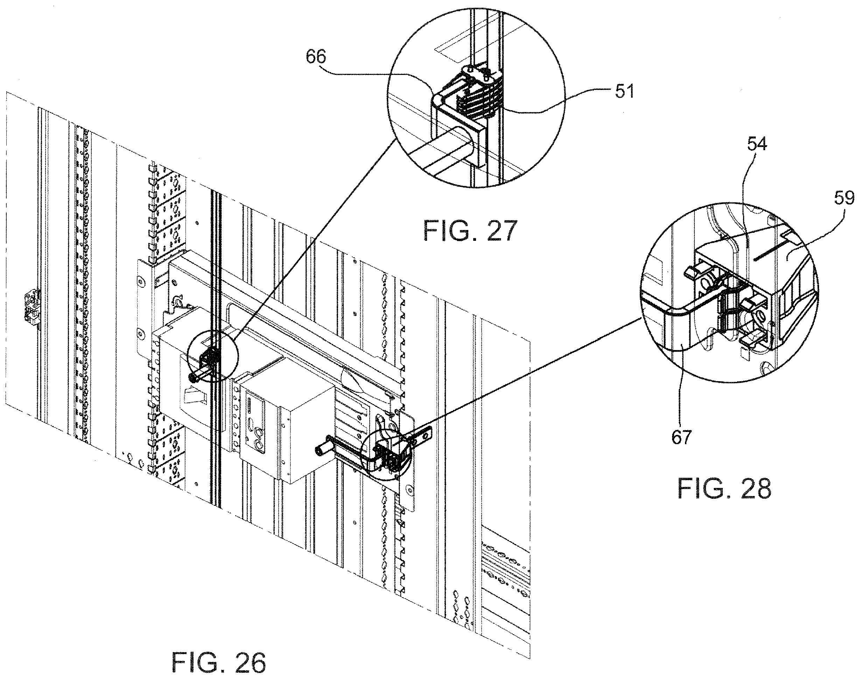

The first base 3 also has seats with IP20 protection to receive clips 54 (figures 26-28 and 30) for the connection of outputs, onto which the pins 67 of the outputs present on the second base 4 engage. Advantageously, said first base 3 also has seats with IP20 protection to receive a removable female terminal board for the connection of auxiliary cables.

Said first base 3, as well as foreseeing positioning guides 55 of the base on busbars, foresees centring pins 56 (figure 21) for the correct positioning of the second base 4 on the first base 3.

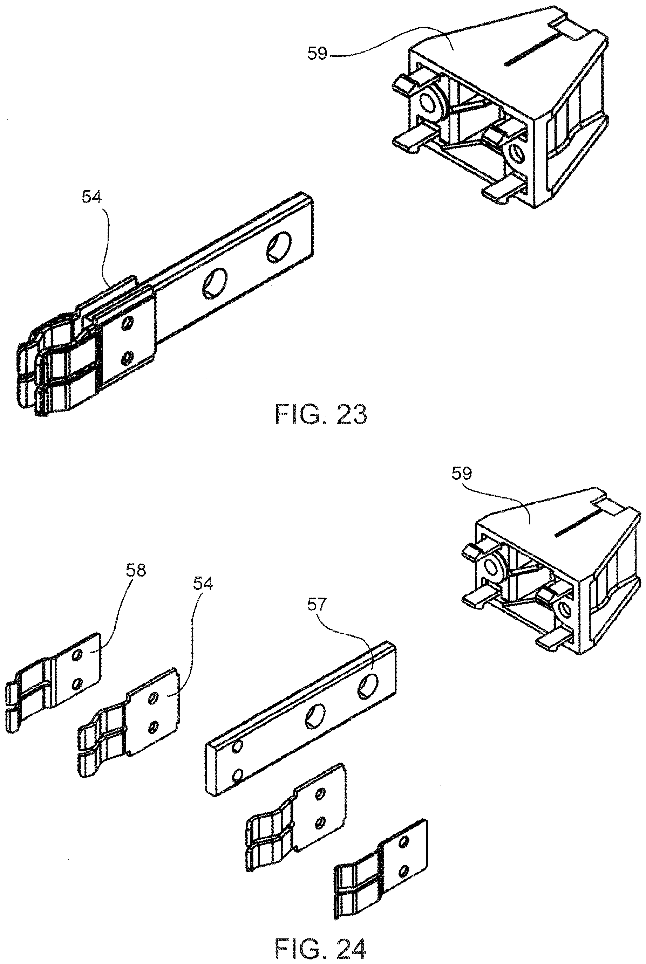

With reference to figures 23 and 24, the clips for the connection of the outputs, able to be defined automatic connection, comprise busbars 57, fixed to respective housing elements 59, with the free end portion of which the actual clips 54 are associated, held in clamped position by springs 58 foreseen externally to clamp said clips 54.

In accordance with an advantageous embodiment the busbars 57 are substantially plate-shaped busbars. In accordance with the embodiment illustrated in the figures, the busbars 57 are substantially in the form of strips or metal fingers. In accordance with the embodiment illustrated in the figures, the clips 54 and the springs 58 are also substantially plate-shaped elements fixed to the free end portions of the busbars 57.

With particular reference to figure 28, it can be seen that the busbars 57 and the housing elements 59 are connected so that the clips 54 and the springs 58 at least partially project outside of such elements.

In accordance with an embodiment, when the second base 4 is mounted on the first base 3, the correct positioning occurs through centring pins 56 (figure 21) positioned on the first base 3. By inserting the second base 4 until it abuts on the fixed base 3 the electrical connection of the feed and of the outputs is made automatically.

The second base 4 is fixed onto the first base through ¼ turn fastening systems, for example 4 fastening systems.

The second base 4 has automatic connection feeding pins 66 (figure 30) that engage onto the clips 51 housed on the first base 3. Further automatic connection pins 67 of the outputs engage onto the output pins 54 housed on the first base 3.

Said second base 4 has a removable male terminal board 77 (figure 29) for the connection of auxiliary cables.

Said second base 4 on its front has grip handles 78.

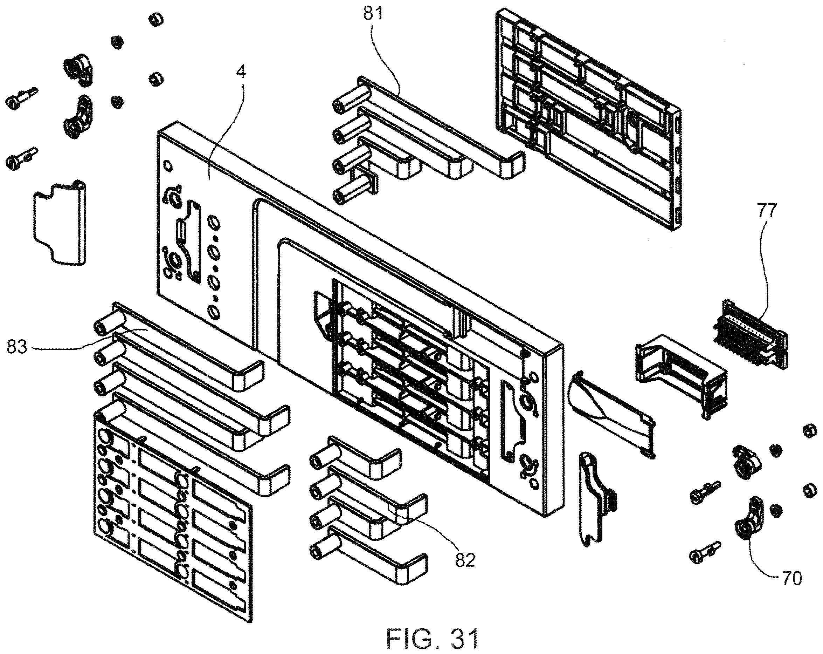

In accordance with an embodiment, the second base 4 has passages for feeding connections 81 (figure 31), suitable for connecting to the first base 3, and circuit breaker output connections 82 and residual current device output connections 83 covered by caps that allow just the pins 66, 67 for connecting and coupling with the circuit breaker and residual current device to come out.

Figures 6, 7, 8, 34 and 35 illustrate some possible embodiments of busbars 2. Such embodiments all comprise an electrical contact rail or pin 6 having entirely or partially the characteristics illustrated in figure 9. In other words, such embodiments all have an electrical contact rail or pin 6 having all or part of the characteristics described above.

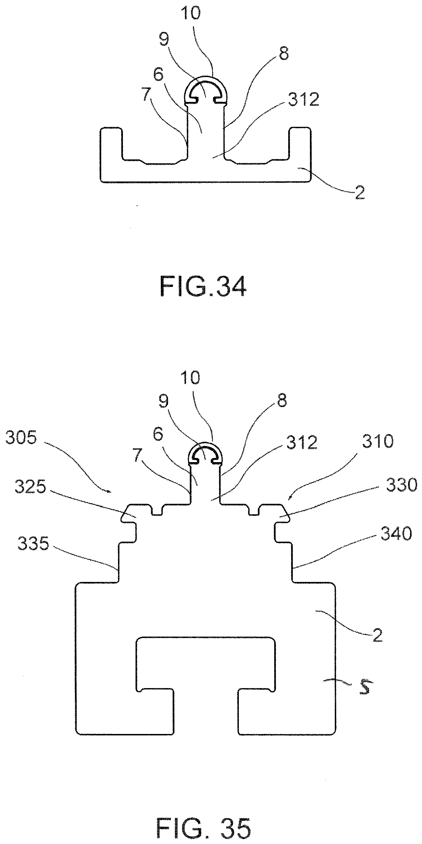

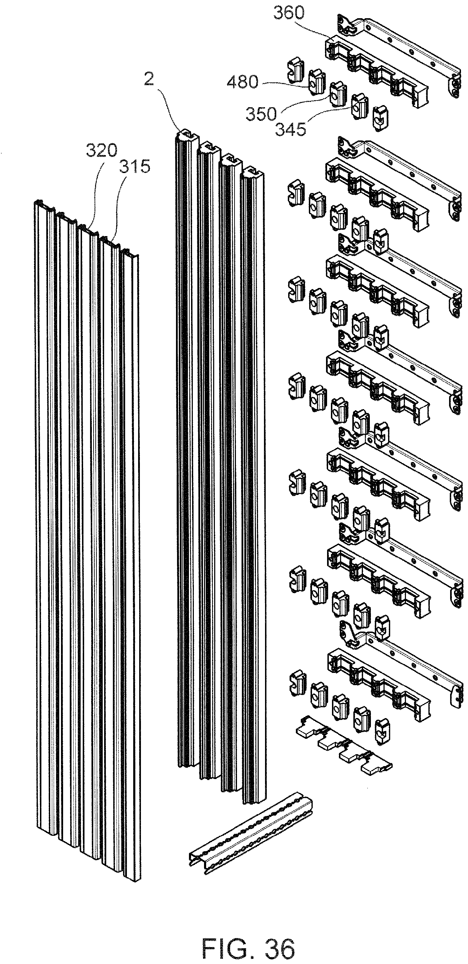

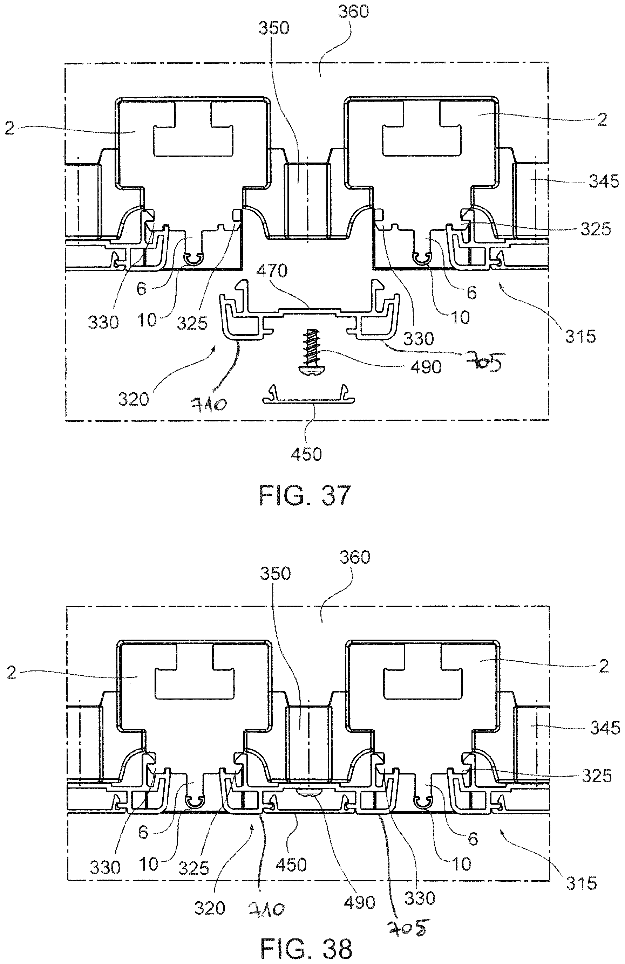

With particular reference to figures 35 and 36, an advantageous and currently preferred embodiment of a busbar 2 is illustrated. As can be seen in figure 35, the busbar 2 comprises a pin 6 that projects centrally from a face of the busbar. Advantageously, the busbar 2 comprises a first and a second coupling portion 305, 310 that are provided on two opposite sides with respect to the pin 6, preferably substantially at the level of the proximal end portion 312 of the pin 6. With reference to figure 38, it can be seen that such coupling portions are suitable for coupling, respectively, with a first and a second insulating cover 315, 320 to removably fix such covers to the busbar 2.

Again with reference to figure 35, it can be seen that according to an embodiment the busbar 2 comprises a transversal section including a portion with a "C"-shape adjacent and opposite the pin 6.

In the example of figures 35 and 38, the first and second coupling portion 305, 310 respectively comprise a first and second snap-in coupling element, in the example a first and second coupling tooth 325, 330, which are suitable for interacting, respectively, with the first and second insulating cover 315, 320 to allow a snap-coupling of such covers with the busbar 2. In other words, the coupling teeth 325, 330 are suitable for interacting with matching snap-in coupling elements provided, respectively, on the first and on the second insulating cover 315, 320 to allow a snap-coupling of such covers with the busbar 2.

Again with reference to such figures, it can be seen that the busbar 2 comprises a pair of anchoring seats 335, 340 provided on two opposite sides of the busbar. The seats 335, 340 are suitable for receiving opposite anchoring blocks 345, 350 of a supporting insulator 360 of the busbar 2, so as to geometrically couple with the anchoring blocks. Such blocks are suitable for removably and firmly fixing the busbar 2 to the insulator 360.

Advantageously, the anchoring seats 335, 340 are withdrawn with respect to the first and second coupling tooth 325, 330 on the opposite side with respect to the apex portion 9. In other words, the anchoring seats 335, 340 are withdrawn with respect to the first and second coupling tooth 325, 330 moving in the direction going from the apex portion 9 towards the proximal end portion 312 of the pin 6.

Figure 38 illustrates a cross section view of a detail of a group of parts, generally indicated with 400 in figure 36, of a cabling system. In the example of figure 36, such a system comprises a plurality of busbars 2 according to the embodiment of figure 35, a plurality of supporting insulators 360 for the busbars 2 and a plurality of insulating covers 310, 315. Specifically, figure 36 illustrates four busbars 2, five insulating covers, and seven supporting insulators.

Going back to figure 38, a first and a second busbar 2 are represented. As can be seen in such a figure, an insulating cover 320 is removably coupled with the second coupling tooth 330 of the first busbar and with the first coupling tooth 325 of the second busbar so that the insulating cover 320 is arranged between the pin 6 of the first busbar and the pin 6 of the second busbar.

Again with reference to figure 38, it can be seen that the insulating cover 320 comprises a first cover portion 705 facing the first busbar and a second cover portion 710 that extends laterally to the first cover portion 705 on the opposite side with respect to the pin 6 of the first busbar. In particular, the second cover portion 710 extends laterally beyond the main body of the first busbar 2 so as to leave a minimum space between the second cover portion 710 and the pin 6 belonging to the second busbar, such a busbar being arranged adjacent to the first busbar. Such a minimum space is, in particular, such as to allow protection according to the "finger test" or IP20. More specifically, such a minimum space allows an electrical connection to be inserted but avoids the introduction of a finger according to the "finger test". In general, such a minimum space allows protection conforming to the finger test.

Figure 38 shows a supporting insulator 360 for supporting at least the first and second busbar. As can be seen in such a figure, according to an advantageous embodiment, attachment elements are provided operatively arranged between the insulating cover 320 and the supporting insulator 360 to removably fix such a cover to the supporting insulator.

Advantageously, the insulating cover 320 comprises a front wall including a wall portion 450 able to be removably coupled, in the example snapped-in, with the remaining part of such a cover 320. Such a wall portion is provided to prevent/allow access to the attachment elements.

The insulator 360 comprises at least one anchoring block 350 arranged between the first and the second busbar to lock at least one of such busbars to the insulator itself. According to an embodiment, the attachment elements comprise first attachment elements provided on the insulating cover 320 and second attachment elements provided on the anchoring block 350. In the example, the first attachment elements comprise at least one attachment through opening (not shown in the figures), preferably an attachment hole, provided on a rear part 470 of the cover 320, whereas the second attachment elements comprise at least one further attachment opening, preferably a blind attachment hole 480 (figure 36), provided on the anchoring block. More specifically, in the example the attachment opening foreseen on the insulating cover 320 and the attachment opening 480 foreseen on the anchoring block 350 are suitable for being arranged facing one another to be passed through by an attachment screw 490.

Based on what has been described above, it is therefore possible to understand how an electrical busbar according to the present invention is such as to solve or at least partially reduce the aforementioned drawbacks with reference to the prior art.

Advantageously, the fact that a busbar is provided comprising an extension that projects from the main body of the busbar so as to form an electrical contact rail including protrusions that project from two opposite contact surfaces, makes it possible to reliably and safely electrically connect an electrical apparatus to the rail through clip interconnection elements, reducing or avoiding the possibility of such interconnection elements being able to uncouple from the rail when the busbars have electric current passing through them. This allows safety to be increased, for example reducing the risk of fire or electrical discharges to which any person located in the proximity of the busbars could be subjected.

Advantageously, the solutions of the present invention make it possible to obtain cabling that is particularly quick, whilst still ensuring total safety, in particular excellent insulation.

Particularly advantageously, the solutions of the present invention ensure cabling that allows IP20 insulation to be maintained even in the case of intervention to replace a circuit breaker without interrupting feeding voltage from the busbars.

Further advantageously, in accordance with an embodiment, providing busbars on which at least a first base and a second base is cabled, makes it possible to leave the busbars live and ensure insulation conforming to the "finger test" or IP20 and to intervene on the system, for example to replace an electrical apparatus, completely eliminating any risk involved in this intervention. Further advantageously, in accordance with an embodiment, providing a busbar equipped with a structure having longitudinal profile with transversal section equipped with at least one portion having a "C"-shape and a further appendix comprising a flat projecting extension with a free end, protected at the apex by a protective shell that does not prevent a correct electrical coupling with its lateral surfaces, makes it possible to combine the utility of a busbar with "C"-shaped profile and a frontally IP20 insulated rail.

Advantageously, in accordance with an embodiment, the fact that a busbar is provided including a transversal section comprising a portion with a frontal "C"-shape arranged laterally to a frontally insulated rail of the aforementioned type and in which such a portion with "C"-shape can be removably coupled with a front insulating cover, simultaneously allows branching off substantially along the entire length of the busbar and protection conforming to the finger test to be obtained without the need to use the grids of the prior art that are normally applied in front of the busbars to protect against contact with the busbars themselves.

What has been described are only particular embodiments of the busbar object of the present invention, to which the man skilled in the art will be able to bring any modifications necessary to adapt it to particular applications, without however departing from the scope of protection of the present invention.

## Claims

1. Electrical busbar (2) comprising a main body with longitudinal profile and an extension as an electrical contact rail (6) in a longitudinal direction that projects from said main body, said extension including a proximal end portion (312) to said body and an apex portion (9) distal from said body, said electrical contact rail (6) having two opposite contact surfaces (7, 8) provided for making an electrical connection to the busbar, said rail (6) comprising protrusions (50) that project from both of said opposite contact surfaces, said protrusions being arranged between said opposite contact surfaces (7, 8) and the apex portion (9);
said electrical busbar (2) being **characterised in that** includes a protective shell (10) made from insulating material, said shell (10) being able to be stably associated with said apex portion (9) of said rail (6) even when it is in use and said apex portion (9) frontally facing said shell (10).

2. Electrical busbar (2) according to claim 1, wherein said protrusions (50) are distinct from the apex portion (9) and are arranged near to such a portion.

3. Electrical busbar (2) according to claim 1 or 2, wherein said protrusions (50) extend laterally with respect to said rail (6) beyond said apex portion (9).

4. Electrical busbar (2) according to any one of the previous claims, wherein said protrusions (50) are obtained through a portion of said rail that is tapered on the opposite side with respect to said apex portion (9), said tapered portion including a section transversal to the direction of projection of said rail that decreases moving in the direction going from said apex portion (9) towards said end portion (312) proximal to said main body.

5. Electrical busbar (2) according to any one of the previous claims, comprising a first (305) and a second (310) coupling portion arranged on two opposite sides with respect to said rail (6), said first and second coupling portion (305, 310) being suitable for respectively interacting with a first (315) and a second (320) insulating cover to removably fix such covers (315, 320) to said busbar (2).

6. Electrical busbar (2) according to claim 5, wherein said first and second coupling portion (305, 310) respectively comprise a first and a second snap-coupling element (325, 330) suitable for interacting, respectively, with said first and second insulating cover (315, 320) to allow a snap-coupling of such covers with said busbar (2).

7. Electrical busbar (2) according to any one of the previous claims, including a pair of anchoring seats (11, 335, 340) provided on two opposite sides of said busbar (2), such seats being suitable for receiving opposed anchoring blocks (12, 345, 350) of a supporting insulator (13, 360) of said busbar (2), in order to geometrically couple with said anchoring blocks, said blocks (12, 345, 350) being suitable for removably and firmly fixing such a busbar (2) to said insulator (13, 360).

8. Electrical busbar (2) according to claim 7 when dependent upon claim 5, wherein said anchoring seats (335, 340) are withdrawn, with respect to said first and second coupling portion (305, 310), on the opposite side with respect to said apex portion (9).

9. Electrical busbar (2) according to claim 1, wherein said busbar (2) comprises a transversal section comprising a portion with a frontal "C"-shape arranged laterally to said rail (6) and defining a seat (11), said portion with "C"-shape being suitable for coupling with an insulating cover (104) able to be associated with said busbar (2).

10. Group of parts comprising at least one electric busbar (2) as defined in any one of the previous claims and at least one insulating cover (104, 315, 320) removably coupled with said busbar.

11. Group of parts according to claim 10, wherein said insulating cover (104, 320) comprises a first cover portion (605, 705) facing said busbar (2) and a second cover portion (610, 710) that extends laterally to the first cover portion (605, 705) on the opposite side with respect to said rail (6), the second cover portion (610, 710) extending laterally beyond the main body of said busbar (2) so as to leave a minimum space between said second cover portion (610, 710) and a further electrical connection rail (6) belonging to a further busbar (2) arranged adjacent to said busbar (2), such a minimum space being suitable for allowing protection conforming to the finger test.

12. Group of parts according to claim 10 or 11 when dependent upon claim 10, wherein said insulating cover (104) is coupled with the portion with frontal "C"-shape so as to leave a minimum space between such a cover and said rail, such a minimum space being suitable for the insertion of an electrical connection and suitable for allowing protection conforming to the finger test.

13. Group of parts according to claim 12, wherein the insulating cover comprises at least one pair of toothed hooks (510) suitable for being inserted in said seat (11) defined by the portion with frontal "C"-shape so as to engage with such a portion to allow the snap-coupling of the insulating cover (104) with said busbar (2).

14. Group of parts according to claim 10 or 11 comprising at least one first and a second electrical busbar (2) as defined in claim 6, said insulating cover (320) being removably coupled with the second coupling portion (330) of said first busbar and with the first coupling portion of said second busbar, so that such an insulating cover is arranged between said rail (6) of said first busbar and said rail (6) of said second busbar.

15. Group of parts according to claim 14, comprising a supporting insulator (360) to support at least said first and second busbar and attachment elements (490) operatively arranged between said insulating cover (320) and said insulator (360) to removably fix said cover (320) to the supporting insulator (360).

16. Group of parts according to claim 14 or 15, wherein said insulating cover (320) comprises a front wall including a wall portion (450) able to be removably coupled with the remaining part of such a cover (320) to allow/prevent access to said attachment elements (490).

## Patentansprüche

1. Stromschiene (2), aufweisend einen Hauptkörper mit Längsprofil und ein aus dem Hauptkörper herausragendes Erweiterungsstück als elektrische Kontaktschiene (6) in einer Längsrichtung, wobei das Erweiterungsstück einen proximalen Endabschnitt (312) an dem Körper und einen Scheitelbereich (9) distal des Körpers umfasst, wobei die elektrische Kontaktschiene (6) zwei einander gegenüberliegende Kontaktflächen (7, 8) aufweist, welche dazu vorgesehen sind, eine elektrische Verbindung mit der Stromschiene herzustellen, wobei die Schiene (6) Überstände (50) aufweist, welche jeweils von den beiden einander gegenüberliegenden Kontaktflächen vorspringen, wobei die Überstände zwischen den einander gegenüberliegenden Kontaktflächen (7, 8) und dem Scheitelbereich (9) angeordnet sind;
wobei die Stromschiene (2) **dadurch gekennzeichnet ist, dass** sie einen Schutzmantel (10) aus Isoliermaterial umfasst, wobei der Mantel (10) fest mit dem Scheitelbereich (9) der Schiene (6) verbunden werden kann, selbst während des Gebrauchs derselben, wenn der Scheitelbereich (9) dem Mantel (10) frontal zugewandt ist.

2. Stromschiene (2) nach Anspruch 1, wobei die Überstände (50) klar von dem Scheitelbereich (9) unterscheidbar und in der Nähe eines solchen Bereichs angeordnet sind.

3. Stromschiene (2) nach Anspruch 1 oder 2, wobei die Überstände (50) sich in Bezug auf die Schiene (6) seitlich über den Scheitelbereich (9) hinaus erstrecken.

4. Stromschiene (2) nach einem der vorangehenden Ansprüche, wobei die Überstände (50) durch einen Bereich der Schiene erhalten werden, der auf der bezüglich des Scheitelbereichs (9) gegenüberliegenden Seite verengt ist, wobei der verengte Bereich einen Abschnitt umfasst, der quer zu der Projektionsrichtung der Schiene liegt, wobei die Schiene in der Richtung von dem Scheitelbereich (9) zu dem Endabschnitt (312) proximal zu dem Hauptkörper schmaler ausgestaltet ist.

5. Stromschiene (2) nach einem der vorangehenden Ansprüche, aufweisend einen ersten Kopplungsbereich (305) und einen zweiten Kopplungsbereich (310), welche in Bezug auf die Schiene (6) an zwei entgegengesetzten Seiten angeordnet sind, wobei der erste und der zweite Kopplungsbereich (305, 310) dazu geeignet sind, mit einer ersten Isolierhülle (315) bzw. einer zweiten Isolierhülle (320) zusammenzuwirken, um solcherlei Hüllen (315, 320) lösbar an der Schiene (2) zu befestigen.

6. Stromschiene (2) nach Anspruch 5, wobei der erste und der zweite Kopplungsbereich (305, 310) ein erstes bzw. ein zweites Schnappverbindungselement (325, 330) aufweisen, die dazu geeignet sind, mit der ersten bzw. der zweiten Isolierhülle (315, 320) zusammenzuwirken, um eine Schnappverbindung derartiger Hüllen mit der Schiene zu ermöglichen.

7. Stromschiene (2) nach einem der vorangehenden Ansprüche, aufweisend ein Paar von Befestigungsflächen (11, 335, 340), die an zwei entgegengesetzten Seiten der Stromschiene (2) vorgesehen sind, wobei diese Flächen dazu geeignet sind, gegenüberliegende Befestigungsblöcke (12, 345, 350) eines Stützisolators (13, 360) der Schiene (2) aufzunehmen, um geometrisch mit den Befestigungsblöcken zu koppeln, wobei die Blöcke (12, 345, 350) dazu geeignet sind, eine derartige Schiene (2) lösbar und fest mit dem Isolator (13, 360) zu verbinden.

8. Stromschiene (2) nach Anspruch 7, sofern dieser von Anspruch 5 abhängig ist, wobei die Befestigungsflächen (335, 340) bezüglich des ersten und zweiten Kopplungsbereichs (305, 310) auf der bezüglich des Scheitelbereichs (9) entgegengesetzten Seite zurückspringen.

9. Stromschiene (2) nach Anspruch 1, wobei die Schiene (2) einen Querschnitt aufweist, welcher einen von vorne betrachtet C-förmigen Abschnitt aufweist, der seitlich zu der Schiene (6) angeordnet ist und einen Sitz (11) definiert, wobei der C-förmige Abschnitt dazu geeignet ist, mit einer Isolierhülle (104) zu koppeln, welche mit der Schiene (2) verbunden werden kann.

10. Teilegruppe, aufweisend mindestens eine Stromschiene (2) wie in einem der vorangehenden Ansprüche festgelegt, und mindestens eine lösbar mit der Schiene verbundene Isolierhülle (104, 315, 320).

11. Teilegruppe nach Anspruch 10, wobei die Isolierhülle (104, 320) einen ersten, der Schiene (2) zugewandten Abdeckungsbereich (605, 705) und einen zweiten, sich seitlich des ersten Abdeckungsbereichs (605, 705) auf der bezüglich der Schiene (6) entgegengesetzten Seite erstreckenden Abdeckungsbereich (610, 710) aufweist, wobei sich der zweite Abdeckungsbereich (610, 710) seitlich über den Hauptkörper der Schiene (2) erstreckt, so dass ein minimaler Raum zwischen dem zweiten Abdeckungsbereich (610, 710) und einer weiteren Stromanschlussschiene (6) verbleibt, die zu einer weiteren, zu der Schiene (2) benachbart angeordneten Schiene (2) gehört, wobei dieser minimale Raum dazu geeignet ist, Schutz entsprechend dem Fingertest zu erlauben.

12. Teilegruppe nach Anspruch 10 oder 11, sofern dieser von Anspruch 10 abhängig ist, wobei die Isolierhülle (104) mit dem von vorne betrachtet "C"-förmigen Abschnitt verbunden ist, so dass ein minimaler Raum zwischen der Hülle und der Schiene verbleibt, wobei der minimale Raum zum Einfügen einer elektrischen Verbindung geeignet ist und dazu geeignet ist, Schutz entsprechend dem Fingertest zu erlauben.

13. Teilegruppe nach Anspruch 12, wobei die Isolierhülle mindestens ein Paar gezahnter Haken (510) aufweist, die dazu geeignet sind, in den Sitz (11) eingefügt zu werden, der durch den von vorne gesehen "C"-förmigen Abschnitt definiert wird, so dass diese mit diesem Abschnitt in Eingriff kommt, um eine Schnappkopplung der Isolierhülle (104) mit der Schiene (2) zu ermöglichen.

14. Teilegruppe nach Anspruch 10 oder 11, aufweisend zumindest eine erste und eine zweite Stromschiene (2) wie in Anspruch 6 festgelegt, wobei die Isolierhülle (320) lösbar mit dem zweiten Kopplungsabschnitt (330) der ersten Stromschiene und mit dem ersten Kopplungsabschnitt der zweiten Stromschiene verbunden ist, so dass die Isolierhülle zwischen der Schiene (6) der ersten Stromschiene und der Schiene (6) der zweiten Stromschiene angeordnet ist.

15. Teilegruppe nach Anspruch 14, aufweisend einen Stützisolator (360) zum Stützen mindestens der ersten und der zweiten Stromschiene sowie Befestigungselemente (490), welche in wirksamer Weise zwischen der Isolierhülle (320) und dem Isolator (360) angeordnet sind, um die Hülle (320) lösbar an dem Stützisolator (460) zu befestigen.

16. Teilegruppe nach Anspruch 14 oder 15, wobei die Isolierhülle (320) eine Vorderwand mit einem Wandabschnitt (450) aufweist, der dazu in der Lage ist, lösbar mit dem verbleibenden Teil der Hülle (320) verbunden zu werden, um Zugang auf die Befestigungselemente (490) zu gewähren/zu verhindern.

## Revendications

1. Barre omnibus électrique (2) comprenant un corps principal avec un profil longitudinal et une extension sous forme de rail de contact électrique (6) dans une direction longitudinale qui fait saillie depuis ledit corps principal, ladite extension comportant une portion d'extrémité proximale (312) audit corps et une portion de sommet (9) distale dudit corps, ledit rail de contact électrique (6) ayant des surfaces de contact opposées (7, 8) prévues pour établir une connexion électrique avec la barre omnibus, ledit rail (6) comprenant des protubérances (50) qui font saillie depuis lesdites deux surfaces de contact opposées, lesdites protubérances étant agencées entre lesdites surfaces de contact opposées (7, 8) et la portion de sommet (9) ;
ladite barre omnibus électrique (2) étant **caractérisée en ce qu'**elle comporte une enveloppe protectrice (10) réalisée en matériau isolant, ladite enveloppe (10) étant capable d'être associée de façon stable à ladite portion de sommet (9) dudit rail (6) même lorsqu'elle est en utilisation et ladite portion de sommet (9) faisant face frontalement à ladite enveloppe (10).

2. Barre omnibus électrique (2) selon la revendication 1, dans laquelle lesdites protubérances (50) sont distinctes de la portion de sommet (9) et sont agencées près d'une telle portion.

3. Barre omnibus électrique (2) selon la revendication 1 ou 2, dans laquelle lesdites protubérances (50) s'étendent latéralement par rapport audit rail (6) au-delà de ladite portion de sommet (9).

4. Barre omnibus électrique (2) selon l'une quelconque des revendications précédentes, dans laquelle lesdites protubérances (50) sont obtenues à travers une portion dudit rail qui est effilée sur le côté opposé par rapport à ladite portion de sommet (9), ladite portion effilée comportant une section transversale à la direction de saillie dudit rail qui diminue en se déplaçant dans la direction allant de ladite portion de sommet (9) vers ladite portion d'extrémité (312) proximale audit corps principal.

5. Barre omnibus électrique (2) selon l'une quelconque des revendications précédentes, comprenant une première (305) et une seconde (310) portion d'accouplement agencées sur deux côtés opposés par rapport audit rail (6), lesdites première et seconde portions d'accouplement (305, 310) étant appropriées pour interagir respectivement avec un premier (315) et un second (320) couvercle isolant pour fixer de façon amovible de tels couvercles (315, 320) à ladite barre omnibus (2).

6. Barre omnibus électrique (2) selon la revendication 5, dans laquelle lesdites première et seconde portions d'accouplement (305, 310) comprennent respectivement un premier et un second élément d'accouplement encliquetable (325, 330) appropriés pour interagir, respectivement, avec lesdits premier et second couvercles isolants (315, 320) pour permettre un accouplement encliquetable de tels couvercles avec ladite barre omnibus (2).

7. Barre omnibus électrique (2) selon l'une quelconque des revendications précédentes, comportant une paire d'assises d'ancrage (11, 335, 340) prévues sur deux côtés opposés de ladite barre omnibus (2), de telles assises étant appropriées pour recevoir des blocs d'ancrage (12, 345, 350) opposés d'un isolateur de support (13, 360) de ladite barre omnibus (2), afin de s'accoupler géométriquement auxdits blocs d'ancrage, lesdits blocs (12, 345, 350) étant appropriés pour fixer de façon amovible et ferme une telle barre omnibus (2) audit isolateur (13, 360).

8. Barre omnibus électrique (2) selon la revendication 7, lorsqu'elle dépend de la revendication 5, dans laquelle lesdites assises d'ancrage (335, 340) sont retirées, par rapport auxdites première et seconde portions d'accouplement (305, 310), sur le côté opposé par rapport à ladite portion de sommet (9).

9. Barre omnibus électrique (2) selon la revendication 1, dans laquelle ladite barre omnibus (2) comprend une section transversale comprenant une portion avec une forme en « C » frontale agencée latéralement audit rail (6) et définissant une assise (11), ladite portion avec la forme en « C » étant appropriée pour s'accoupler avec un couvercle isolant (104) capable d'être associé à ladite barre omnibus (2).

10. Groupe de pièces comprenant au moins une barre omnibus électrique (2) telle que définie dans l'une quelconque des revendications précédentes et au moins un couvercle isolant (104, 315, 320) accouplé de façon amovible à ladite barre omnibus.

11. Groupe de pièces selon la revendication 10, dans lequel ledit couvercle isolant (104, 320) comprend une première portion de couvercle (605, 705) faisant face à ladite barre omnibus (2) et une seconde portion de couvercle (610, 710) qui s'étend latéralement à la première portion de couvercle (605, 705) sur le côté opposé par rapport audit rail (6), la seconde portion de couvercle (610, 710) s'étendant latéralement au-delà du corps principal de ladite barre omnibus (2) de façon à laisser un espace minimal entre ladite seconde portion de couvercle (610, 710) et un rail de connexion électrique (6) supplémentaire appartenant à une barre omnibus (2) supplémentaire agencée adjacente à ladite barre omnibus (2), un tel espace minimal étant approprié pour permettre une protection conforme à l'essai des doigts.

12. Groupe de pièces selon la revendication 10 ou 11 lorsqu'elle dépend de la revendication 10, dans lequel ledit couvercle isolant (104) est accouplé à la portion avec une forme en « C » frontale de façon à laisser un espace minimal entre un tel couvercle et ledit rail, un tel espace minimal étant approprié pour l'insertion d'une connexion électrique et approprié pour permettre une protection conforme à l'essai des doigts.

13. Groupe de pièces selon la revendication 12, dans lequel le couvercle isolant comprend au moins une paire de crochets dentés (510) appropriés pour être insérés dans ladite assise (11) définie par la portion avec la forme en « C » frontale de façon à s'enclencher avec une telle portion pour permettre l'accouplement encliquetable du couvercle isolant (104) avec ladite barre omnibus (2).

14. Groupe de pièces selon la revendication 10 ou 11 comprenant au moins une première et une seconde barre omnibus électrique (2) telle que définie dans la revendication 6, ledit couvercle isolant (320) étant accouplé de façon amovible à ladite seconde portion d'accouplement (330) de ladite première barre omnibus et à ladite première portion d'accouplement de ladite seconde barre omnibus, de sorte qu'un tel couvercle isolant soit agencé entre ledit rail (6) de ladite première barre omnibus et ledit rail (6) de ladite seconde barre omnibus.

15. Groupe de pièces selon la revendication 14, comprenant un isolateur de support (360) pour supporter au moins lesdites première et seconde barres omnibus et des éléments d'arrimage (490) agencés opérationnellement entre ledit couvercle isolant (320) et ledit isolateur (360) pour fixer de façon amovible ledit couvercle (320) à l'isolateur de support (360).

16. Groupe de pièces selon la revendication 14 ou 15, dans lequel ledit couvercle isolant (320) comprend une paroi avant comportant une portion de paroi (450) capable d'être accouplée de façon amovible à la pièce restante d'un tel couvercle (320) pour permettre/empêcher un accès auxdits éléments d'arrimage (490).
